# EUROPEAN PATENT APPLICATION

(11) **EP 1 494 103 A1**
(43) Date of publication of application: **05.01.2005**
(21) Application number: 04014382.8
(22) Date of filing: 18.06.2004
(51) Int. Cl.: G06F 1/00

(54) **Trusted input for mobile platform transactions**

(30) Priority: 30.06.2003 US 609828
(71) Applicant: INTEL CORPORATION, Santa Clara, CA 95052 (US)
(72) Inventor: Poisner, David, Folsom, CA 95630 (US)
(74) Representative: Goddar, Heinz J., Dr.

(57) **Abstract**

According to one embodiment, computer system is disclosed. The computer system includes a central processing unit (CPU), and a chipset coupled to the CPU including protected registers. The computer system also includes a micro-controller coupled to the chipset to perform scans to receive key-matrix data, wherein trusted software accesses the key-matrix data via the protected registers to ensure the authenticity of the data.

## Description

Contained herein is material that is subject to copyright protection. The copyright owner has no objection to the facsimile reproduction of the patent disclosure by any person as it appears in the Patent and Trademark Office patent files or records, but otherwise reserves all rights to the copyright whatsoever.

### FIELD OF THE INVENTION

The present invention relates to computer systems; more particularly, the present invention relates to computer systems that may operate in a trusted or secured environment.

### BACKGROUND

The increasing number of financial and personal transactions being performed on local or remote microcomputers has given impetus for the establishment of "trusted" or "secured" microprocessor environments. The problem these environments try to solve is that of loss of privacy, or data being corrupted or abused. Users do not want their private data made public. They also do not want their data altered or used in inappropriate transactions. Examples of these include unintentional release of medical records or electronic theft of funds from an on-line bank or other depository. Similarly, content providers seek to protect digital content (for example, music, other audio, video, or other types of data in general) from being copied without authorization.

However, mobile computer system platforms pose a significant challenge for trusted input/output (I/O). The integrated keyboard for a mobile computer system is typically scanned by a micro-controller. The micro-controller determines which keys are pressed at the keyboard and reports the keystroke data to the computer system operating system. The micro-controller is also programmed to perform other functions, such as power management, battery recharge, LED control, power plane control, etc.

Moreover, there is a large amount of software used in the micro-controller. In fact, many computer systems have over 64K Bytes of software code. However, it is not practical to certify such code as trustworthy. Even if the code were certified, the code is changed so often that it would continuously have to be re-certified, requiring considerable time and expense.

Further, other vulnerabilities exist within the micro-controller. For instance, the interface to the keyboard uses I/O addresses that are unprotected. Additionally, there are commands that system software can issue to the micro-controller to emulate a user typing keys at the keyboard.

### BRIEF DESCRIPTION OF THE DRAWINGS

The invention is illustrated by way of example and not limitation in the figures of the accompanying drawings, in which like references indicate similar elements, and in which:

**Figure 1** is a block diagram of one embodiment of a computer system;

**Figure 2** is a block diagram illustrating one embodiment of a central processing unit (CPU);

**Figure 3** is a block diagram illustrating one embodiment of a memory;

**Figure 4** is a flow diagram of one embodiment for reading trusted input from a micro-controller; and

**Figure 5** is a block diagram illustrating one embodiment of a micro-controller integrated circuit.

### DETAILED DESCRIPTION

A mechanism to guarantee trusted keyboard input at a mobile computer system is described. In the following detailed description of the present invention numerous specific details are set forth in order to provide a thorough understanding of the present invention. However, it will be apparent to one skilled in the art that the present invention may be practiced without these specific details. In other instances, well-known structures and devices are shown in block diagram form, rather than in detail, in order to avoid obscuring the present invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

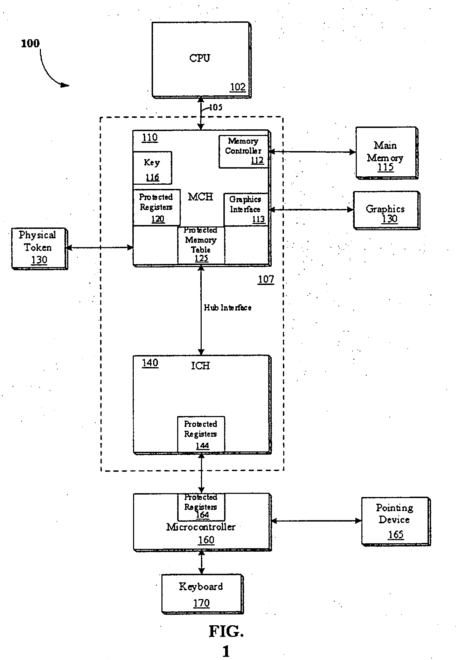

Figure 1 is a block diagram of one embodiment of a computer system 100. Computer system 100 includes a central processing unit (CPU) 102 coupled to bus 105. In one embodiment, CPU 102 is a processor in the Pentium® family of processors including the Pentium® II processor family, Pentium® III processors, and Pentium® IV processors available from Intel Corporation of Santa Clara, California. Alternatively, other CPUs may be used.

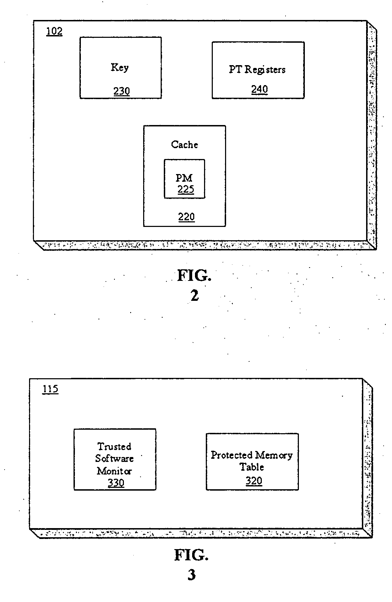

**Figure 2** is a block diagram illustrating one embodiment of CPU 102. In one embodiment, CPU 102 includes cache memory (cache) 220, embedded key 230, and page table (PT) registers 240. All or part of cache 220 may include, or be convertible to, private memory (PM) 225. According to one embodiment, private memory 225 is a memory with sufficient protections to prevent access to it by any unauthorized device (e.g., any device other than the associated CPU 102) while activated as a private memory.

In the illustrated embodiment, cache 220 may have various features to permit its selective isolation as a private memory. In another embodiment not shown, private memory 225 may be external to and separate from cache memory 550, but still associated with CPU 102. Key 230 may be an embedded key to be used for encryption, decryption, and/or validation of various blocks of data and/or code. PT registers 240 may be a table in the form of registers to identify memory pages that are to be accessible only by protected code, and which memory pages are not to be protected.

Referring back to **Figure 1**, a chipset 107 is also coupled to bus 105. Chipset 107 includes a memory control hub (MCH) 110. MCH 110 may include a memory controller 112 that is coupled to a main system memory 115. Main system memory 115 stores data and sequences of instructions that are executed by CPU 102 or any other device included in system 100. In one embodiment, main system memory 115 includes dynamic random access memory (DRAM); however, main system memory 115 may be implemented using other memory types. Additional devices may also be coupled to bus 105, such as multiple CPUs and/or multiple system memories.

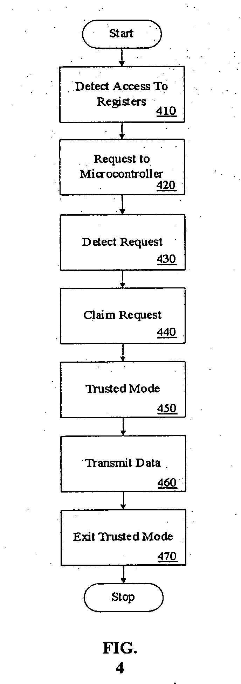

**Figure 3** is a block diagram illustrating one embodiment of memory 115. Referring to **Figure 3**, memory 115 may include protected memory table 320 and trusted software (s/w) monitor 330. In some embodiments, protected memory table 320 is a table to define which memory blocks (where a memory block is a range of contiguously addressable memory locations) in memory 115 are to be inaccessible to direct memory access (DMA) transfers.

Since all accesses to memory 115 go through MCH 110, MCH 110 may check protected memory table 320 before permitting any DMA transfer to take place. In a particular embodiment, MCH 110 may use caching techniques to reduce the number of necessary accesses to protected memory table 320.

In one embodiment, protected memory table 320 is implemented as a table of bits, with each bit corresponding to a particular memory block in memory 115 (e.g., each bit may correspond to a single page, with a logic '1' indicating the page is protected from DMA transfers and a logic '0' indicating the page is not so protected). In a particular operation, the memory blocks protected from DMA transfers by protected memory table 320 may be the same memory blocks restricted to protected processing by PT registers 240 in CPU 102.

In one embodiment, trusted s/w monitor 330 monitors and controls a protected operating environment once the protected operating environment has been established. In a particular embodiment, trusted s/w monitor 330 is located only in memory blocks that are protected from data transfers (e.g., DMA transfers) by protected memory table 320, thus assuring that trusted s/w monitor 330 cannot be compromised by data transfers from unprotected and/or unauthorized devices. The protected memory table 320 may also protect itself from alteration by data transactions by protecting the memory blocks including protected memory table 320.

Referring back to **Figure 1**, MCH 110 may also include a graphics interface 113 coupled to a graphics accelerator 130. In one embodiment, graphics interface 113 is coupled to graphics accelerator 130 via an accelerated graphics port (AGP) that operates according to an AGP Specification Revision 2.0 interface developed by Intel Corporation of Santa Clara, California.

According to one embodiment, MCH 110 includes key 116 to be used in various encryption, decryption and/or validation processes, protected registers 120 and protected memory table 125. In one embodiment, the protected memory table is implemented in MCH 110 as protected memory table 125 and protected memory table 320 may be eliminated.

In another embodiment, the protected memory table is implemented as protected memory table 320 in memory 115 as previously described and protected memory table 125 may be eliminated. The protected memory table may also be implemented in other ways not shown. Regardless of physical location, the purpose and basic operation of the protected memory table may be substantially as described.

In one embodiment, protected registers 120 are registers that are writable by commands that may only be initiated by trusted code (e.g., microcode and macrocode) in CPU 102. Protected code is code whose execution may be initiated by authorized instruction(s) and/or by hardware that is not controllable by unauthorized devices. In one embodiment, protected registers 120 hold data that identifies the locations of, and/or controls access to, protected memory table 320 and trusted s/w monitor 330.

In one embodiment, protected registers 120 include a register to enable or disable the use of protected memory table 320 so that the DMA protections may be activated before entering a protected operating environment and deactivated after leaving the protected operating environment. Protected registers 120 may also include a writable register identifying the location of protected memory table 320, so that the location does not have to be hardwired into MCH 110.

In one embodiment, protected registers 120 may include the temporary location of the trusted s/w monitor 330 before it is placed into protected locations of memory 115, so that it may be located for the transfer. In one embodiment, protected registers 120 may include an execution start address of trusted s/w monitor 330 after the transfer into memory 115, so that execution may be transferred to trusted s/w monitor 330 after initialization of the protected operating environment.

Physical token 130 may be a circuit to protect data related to creating and maintaining a protected operating environment. In a particular embodiment, physical token 130 includes a key (not shown), which may be an embedded key to be used for specific encryption, decryption and/or validation processes. Physical token 130 may also include storage space to be used to hold a digest value and other information to be used in the protected operating environment. In one embodiment the storage space in physical token 130 may include non-volatile memory (e.g., flash memory) to retain its contents in the event of power loss to the physical token.

Referring back to **Figure 1**, MCH 110 is coupled to an input/output control hub (ICH) 140 via a hub interface. ICH 140 provides an interface to input/output (I/O) devices within computer system 100. ICH 140 includes protected registers 144 , which extends the protected path. In one embodiment, ICH 140 is coupled to a micro-controller 160.

In one embodiment, micro-controller 160 also includes registers (e.g., protected registers 164) to further extend the protected path. In a further embodiment, ICH 140 is coupled to micro-controller 160 via a low pin count (LPC) interface. However, one of ordinary skill in the art will appreciate that other interfaces may be used without departing from the true scope of the invention.

Micro-controller 160 is coupled to a pointing device 165 and a keyboard 170. In one embodiment, pointing device 165 (e.g., touch pad, trackpoint, etc.) and keyboard 170 are integrated within computer system 100. However, pointing device 165 (e.g., mouse) and/or keyboard 170 may be coupled external to computer system 100 in other embodiments.

According to one embodiment, micro-controller 160 conducts a key matrix scan determines which keys are pressed at keyboard 170. In addition, micro-controller 160 may track movement data associated with pointing device 165. In a further embodiment, micro-controller 160 reports the keystroke and movement data to the computer system operating system.

As discussed above, micro-controllers are typically programmed to perform other functions, such as power management, battery recharge, LED control, power plane control, etc. Software used at a micro-controller to implement such functions may lead to security concerns at computer system 100. Accordingly, in one embodiment micro-controller 160 is placed into a trusted mode prior to transmitting key matrix data to ICH 140. In one embodiment, micro-controller 160 operates according to a trusted mode and an un-trusted mode.

In such an embodiment, once micro-controller 160 is in the trusted mode, protected registers 120 are used to access registers within micro-controller 160. In one embodiment, the trusted mode of the micro-controller 160 is enabled via a write using the trusted write path through chipset 107. Thus, the trusted Mode of the micro-controller can only be enabled by the trusted software, since un-trusted software is not capable of generating those types of cycles

Since protected registers 120 are writable by commands that may be initiated only by trusted micro-code in CPU 102, only trusted software may access the key matrix scan function of micro-controller 160 through protected registers 120.

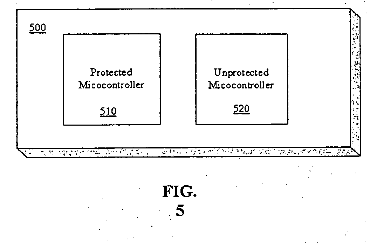

**Figure 4** is a flow diagram of one embodiment for reading trusted input from micro-controller 160. At processing block 410, MCH 110 detects an access to protected registers 120, indicating a request by trusted software to receive key matrix data from micro-controller 160. At processing block 420, ICH 140 performs a read or write request to micro-controller 160 via the LPC interface using a special cycle format.

As described above, MCH 110 detects a cycle to the trusted register space in micro-controller 160. As a result, MCH 110 forwards the cycle to the ICH 140. When ICH 140 detects the cycle to the trusted register space in micro-controller 160, ICH 140 forwards the cycle to the LPC. When micro-controller 160 recognizes the cycle to registers 164, micro-controller 160 responds to the cycle. In one embodiment, the special cycle on LPC has a format that is unique, and standard LPC devices are not permitted to respond to this cycle or latch its data contents.

At processing block 430, micro-controller 160 detects the special cycle request from ICH 140. At processing block 440, micro-controller 160 claims the special cycle request received from ICH 140. At processing block 450, micro-controller 160 enters the trusted mode. At processing block 460, micro-controller 160 transmits the keystroke and movement data to protected registers 120. Thus, keystroke and movement data will not be provided to any un-trusted legacy I/O addresses that could conceivably be used pirate the data.

At processing block 470, micro-controller 160 exits the trusted mode. Consequently, other micro-controller 160 functions may be conducted. Note that micro-controller 160 can be taken out of the trusted mode by resetting computer system 100, or by an access to protected registers 120 via trusted software.

According to one embodiment, micro-controller 160 is separated so that the key matrix function is included on a separate micro-controller. Figure 5 is a block diagram illustrating one embodiment of an integrated circuit (IC) 500. IC 500 includes protected micro-controller 510 and unprotected micro-controller 520. In one embodiment, micro-controller 510 is used only for key matrix functionality, while micro-controller 520 is used for other functions (e.g., power management, battery recharge, LED control, power plane control, etc.).

In such an embodiment, protected micro-controller access ICH 140 upon detecting a special cycle request and entering the trusted mode. Otherwise, unprotected micro-controller 520 accesses ICH 140. Therefore, key matrix function cannot be accessed by rogue software.

In other embodiments, micro-controller 510 and micro-controller 520 may be located on separate IC die. In yet another embodiment, protected micro-controller 510 may be replaced with be replaced by other types of logic devices that can implement a hard-coded state machine to perform matrix scans

The above-description provides a trusted input path for key matrix scans from keyboards and pointing devices on mobile computer systems. Therefore, there is no requirement certify each component of software code operating on the computer system micro-controller.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims, which in themselves recite only those features regarded as essential to the invention.

## Claims

1. A computer system comprising:
a central processing unit (CPU);
a chipset, coupled to the CPU, including protected registers; and
a micro-controller coupled to the chipset to perform scans to receive key-matrix data, wherein trusted software accesses the key-matrix data via the protected registers to ensure the authenticity of the data.

2. The computer system of claim 1 further comprising a keyboard coupled to the micro-controller to provide keystroke data.

3. The computer system of claim 2 further comprising a pointing device coupled to the micro-controller to provide cursor movement data.

4. The computer system of claim 3 wherein the keyboard and pointing device are integrated within the same housing as the CPU, chipset and micro-controller.

5. The computer system of claim 1 wherein the chipset further comprises:
a protected memory table; and
a memory controller.

6. The computer system of claim 5 further comprising a memory device coupled to the memory controller.

7. The computer system of claim 6 wherein the memory device comprises:
a protected memory table; and
a trusted software monitor.

8. The computer system of claim 1 wherein the chipset and the micro-controller are coupled via a low-pin count (LPC) interface.

9. The computer system of claim 1 wherein the computer system is a portable computer system.

10. The computer system of claim 1 wherein the micro-controller comprises:
a first component to execute key-matrix scans; and
a second component to execute functions other than matrix scans.

11. The computer system of claim 10 wherein the first component and the second component are integrated on the same integrated circuit.

12. The computer system of claim 11 wherein the first component and the second component are on separate integrated circuits.

13. A micro-controller comprising:
a first component having protected registers to execute key-matrix scans, wherein trusted software accesses the key-matrix data via the protected registers to ensure the authenticity of the data; and
a second component to execute functions other than matrix scans.

14. The computer system of claim 13 wherein the first component and the second component are integrated on the same integrated circuit.

15. The computer system of claim 13 wherein the first component and the second component are on separate integrated circuits.

16. A method comprising:
generating an encryption key within a computer system using trusted software;
the trusted software writing to trusted registers within the computer system to initiate a key matrix scan at a micro-controller; and
receiving key-matrix data from the micro-controller.

17. The method of claim 16 further comprising:
a chipset detecting a special cycle to trusted registers within the micro-controller; and
the micro-controller detecting the special cycle.

18. The method of claim 17 further comprising the micro-controller entering a trusted mode in response to detecting the special cycle.

19. The method of claim 18 further comprising the micro-controller transmitting keystroke and movement data to protected registers within the chipset.

20. The method of claim 19 further comprising the micro-controller exiting the trusted mode.

21. A computer system comprising:
a central processing unit (CPU);
a chipset, coupled to the CPU, including protected registers;
a memory device coupled to the chipset; and
a micro-controller coupled to the chipset to perform scans to receive key-matrix data, wherein trusted software accesses the key-matrix data via the protected registers to ensure the authenticity of the data.

22. The computer system of claim 21 further comprising a keyboard coupled to the micro-controller to provide keystroke data.

23. The computer system of claim 22 further comprising a pointing device coupled to the micro-controller to provide cursor movement data.

24. The computer system of claim 21 wherein the chipset further comprises:
a protected memory table; and
a memory controller coupled to the memory device.

25. The computer system of claim 24 wherein the memory device comprises:
a protected memory table; and
a trusted software monitor.
